Europäisches Patentamt

European Patent Office

Office européen des brevets

(19)

(11) **EP 0 758 061 A1**

(12) **EUROPEAN PATENT APPLICATION**

(43) Date of publication:
12.02.1997 Bulletin 1997/07

(51) Int. Cl.⁶: **F16H 61/06**

(21) Application number: 96110737.2

(22) Date of filing: 03.07.1996

(84) Designated Contracting States:
**DE GB IT**

(30) Priority: **07.08.1995 JP 219476/95**

(71) Applicant: **AISIN AW CO., LTD.**
**Anjo-shi Aichi-ken (JP)**

(72) Inventors:
• **Fukaya, Naoyuki**
**Anjo-shi, Aichi-ken, 444-11 (JP)**

• **Fukutani, Masayuki**
**Anjo-shi, Aichi-ken, 444-11 (JP)**
• **Noda, Koji**
**Anjo-shi, Aichi-ken, 444-11 (JP)**
• **Ando, Mitsuhiko**
**Anjo-shi, Aichi-ken, 444-11 (JP)**
• **Kawai, Masahiro**
**Anjo-shi, Aichi-ken, 444-11 (JP)**

(74) Representative: **VOSSIUS & PARTNER**
**Siebertstrasse 4**
**81675 München (DE)**

(54) **Control system for automatic transmission**

(57)    A control system for use in an automatic transmission for achieving a first gear stage by applying a first engage element and a second gear stage by applying a second engage element and for effecting a shift from the second gear stage to the first gear stage by releasing the second engage element and by applying the first engage element. The control system comprises: vehicle speed detecting means for detecting a vehicle speed; throttle acceleration detecting means for detecting the rate of change in the throttle opening of an engine per unit time as a throttle acceleration; and control means for controlling the applying and releasing timings of the two engage elements on the basis of the vehicle speed detected by the vehicle speed detecting means and the throttle acceleration detected by the throttle acceleration detecting means.

**Fig. 1**

EP 0 758 061 A1

## Description

The present invention relates to a control system for an automatic transmission to be mounted on a vehicle and, more particularly, to controls of timings for applying and releasing engage elements at a shifting time.

In the automatic transmission to be mounted on the vehicle, a plurality of gear stages are usually established by either causing specific speed change elements in a transmission mechanism composed of planetary gears to engage with each other through frictional engage elements or retaining the same on a transmission case through brakes thereby to change the power transmission paths of gear trains. For the adjoining two gear stages such as second speed and third speed gear stages of the automatic transmission, a shift from the other gear stage or third speed to one gear stage or second speed is effected by releasing a second engage element to be applied for achieving the other gear stage and by applying a first engage element to be applied for achieving the one gear stage.

For this shifting operation, the timings for releasing and applying the engage elements are important. The engine races if the application is delayed with respect to the release. If the application is premature with respect to the release, on the other hand, the two engage elements tie up each other to make the shift shock heavy. In order to control the shifting operation smoothly, there has been disclosed in the prior art the technique of Japanese Patent Laid-Open No.6-94119. According to this technique, the shift shock is lightened by controlling the back pressure of an accumulator attached to the hydraulic servo of the two engage elements, on the basis of the vehicle speed computed from the output RPM and by timing the release of a clutch corresponding to the second engage element and the application of a brake corresponding to the first engage element.

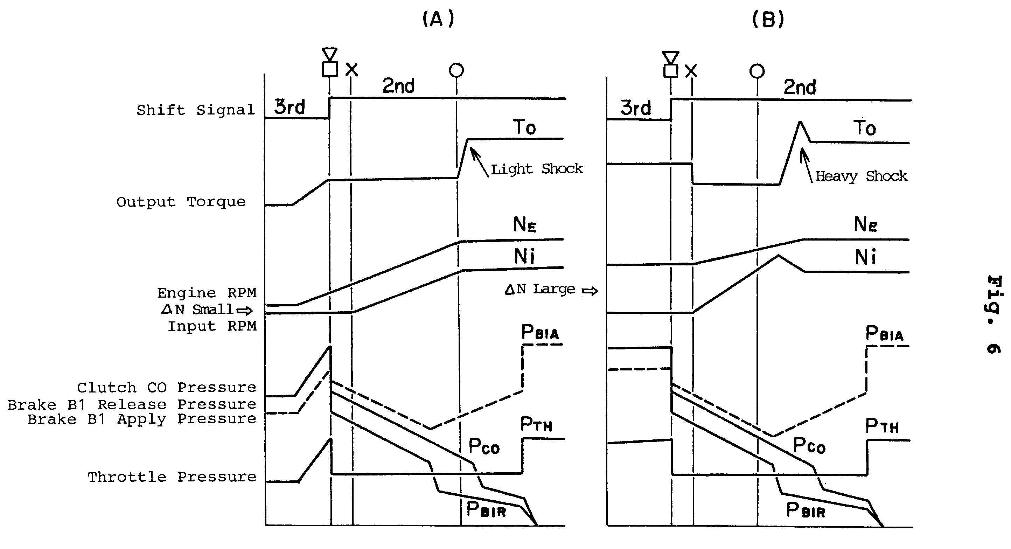

According to the prior art described above, however, when a shift from the third speed (3rd) to the second speed (2nd) is decided, an engine RPM (NE) is different for an identical input RPM (Ni) of the automatic transmission at an equal vehicle speed between the case (as will be called the "quick step"), in which the accelerator pedal is abruptly stepped on (as shown at (A) in Fig. 6), and the case (as will be called the "slow step"), in which the accelerator pedal is gently stepped on (as shown at (B) in Fig. 6). The engine RPM (NE) is high in the case of the slow step because of a large slippage of the torque converter but is low in the case of the quick step because of a relatively small slippage.

Thus, with a rise (as indicated by dotted line) of the apply pressure (PBIA) of the apply side oil chamber of the hydraulic servo of a brake B1 to be applied, due to the drop of the release pressure (PBIR) of the release side oil chamber, the rate for the input RPM (Ni) to approach the engine RPM (NE) in accordance with the release of a load from a shift starting point (as indicated by symbol X), at which the release of the clutch C0 is started, becomes the higher for the larger difference (△ N) between the two RPMs (NE) and (Ni), so that the rise of the input RPM (Ni) becomes so quicker for the slow step as to exceed the RPM for the second speed synchronisation before the engagement of the brake B1 to be applied is insufficient (that is, while the apply pressure (PBIA) of the brake B1 is dropping). As this engagement advances, an action to return the RPM for the second speed synchronization occurs so that the shift shock becomes heavy, as seen from the peak in the output torque curve (To) of Fig. 6. In the case of Fig. 6, on the other hand, the control of the hydraulic characteristics are timed to the quick step (A). In the case of setting the hydraulic characteristics with reference to the slow step, on the contrary, the shift shock may be deteriorated by the tie-up of the clutch C0 and the brake B1 if the apply timing of the brake B1 to be applied is premature.

It is, therefore, a first object of the present invention to provide a control system for an automatic transmission, which is enabled to lighten the shift shock by controlling the timings for applying and releasing the engage elements in accordance with the rate of change in the throttle opening.

A second object of the present invention is to realize the aforementioned control while the accumulator back pressure control mechanism of the prior art.

A third object of the present invention is to further lighten the shift shock by refining the response to the rate of change in the throttle opening in the aforementioned control.

A fourth object of the present invention is to further lighten the shift shock by computing the rate of change in the throttle opening at the time of deciding a shift.

In order to achieve the above-specified first object, the control system of the present invention for use in an automatic transmission for achieving a first gear stage by applying a first engage element and a second gear stage by applying a second engage element and for effecting a shift from the second gear stage to the first gear stage by releasing the second engage element and by applying the first engage element, comprises: vehicle speed detecting means for detecting a vehicle speed; throttle acceleration detecting means for detecting the rate of change in the throttle opening of an engine per unit time as a throttle acceleration; and control means for controlling the applying and releasing timings of the two engage elements on the basis of the vehicle speed detected by the vehicle speed detecting means and the throttle acceleration detected by the throttle acceleration detecting means.

In order to achieve the above-specified second object, moreover, a hydraulic servo of the second engage element includes an accumulator and a back pressure chamber for the accumulator, and the control means is accumulator back pressure control means for controlling the back pressure of the accumulator, to lower the back pressure, when the throttle acceleration detected by the throttle acceleration detecting means is high, but to raise the back pressure when the throttle acceleration is low.

In order to achieve the above-specified third object, still moreover, the control means is accumulator back pressure control means for controlling the back pressure of the accumulator of the hydraulic servo of the second engage element, wherein the accumulator back pressure control means has maps of the accumulator back pressure, as set to correspond to the vehicle speed and the throttle acceleration, and wherein the maps are interchanged according to the vehicle speed detected by the vehicle speed detecting means, the throttle acceleration detected by the throttle acceleration detecting means, and a predetermined value.

In order to achieve the above-specified fourth object, furthermore, the throttle acceleration detecting means detects the rate of change in the throttle opening for a predetermined time period from a predetermined time before a shift decision to the shift decision, as the throttle acceleration.

In addition, the accumulator back pressure control means acting as the control means includes: an electronic control unit; a throttle pressure control valve for outputting a throttle pressure in response to an electric signal coming from the electronic control unit; and an accumulator control valve for outputting the accumulator back pressure in response to the throttle pressure.

In the present invention thus constructed, when the second engage element is released but the first engage element is applied to change the speed from the second gear stage to the first gear stage, the timings for applying and releasing the two engage elements are controlled according to the throttle acceleration and the vehicle speed. Thanks to the difference between the engine RPM and the input RPM, as caused due to the difference in the throttle acceleration, the timings for releasing and applying the two engage elements can be matched while considering the rising rate of the input RPM after the engage element to be released has been released. This makes it possible to prevent the dislocation of the timings to the engine racing direction and the tie-up direction thereby to lighten the shift shock. It is also possible to control the shift time properly.

In the construction as set forth in claim 2, moreover, the release timing is delayed by lowering the back pressure of the accumulator of the engage element at the release side, when the throttle acceleration is high, but by raising the same back pressure when the throttle acceleration is low. As a result, the control according to the throttle acceleration can be effected exclusively by controlling the back pressure of the accumulator, so that the engine racing or tie-up can be prevented to lighten the shift shock without changing the hydraulic control mechanism of the prior art.

In the construction as set forth in claim 3, still moreover, a finer control is performed according to the throttle acceleration so that the it can cover a wider change in the throttle acceleration to make the reduction of the shift shock more reliably.

In the construction as set forth in claim 4, furthermore, the throttle acceleration is detected at the shift deciding time so that the timing can be controlled according to the throttle acceleration before or at the shift start thereby to make the reduction of the shift shock more reliably.

Fig. 1 is a system construction diagram showing the construction of a control system for an automatic transmission according to one mode of embodiment of the present invention in combination of a circuit diagram and a block diagram;
Fig. 2 is a skeleton diagram showing the mechanical portion of the automatic transmission to which is applied the present invention;
Fig. 3 is an operation chart showing the operations of the automatic transmission;
Fig. 4 is a flow chart showing the shift control by the control system;
Fig. 5 is a time chart of the shift control at the time of stepping on the accelerator pedal; and
Fig. 6 is a time chart of the shift control by the conventional control system.

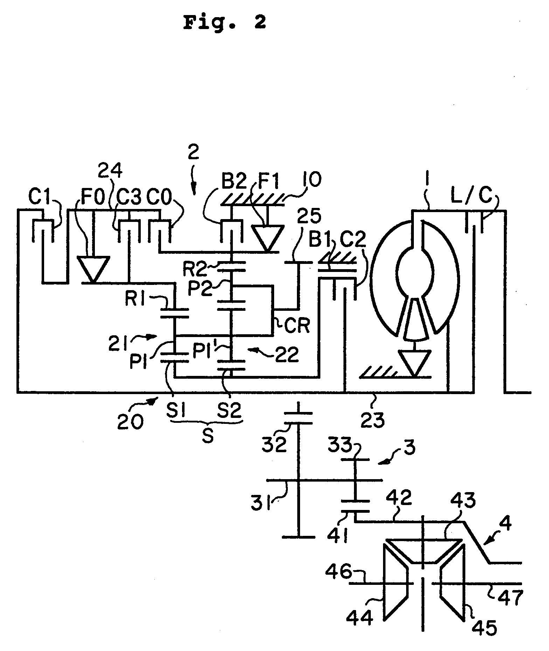

Here will be described a mode of embodiment of the present invention with reference to the accompanying drawings. The mechanical portion of an automatic transmission having four forward and one reverse speeds, to which is applied the present invention, is constructed, as shown in a skeleton diagram in Fig. 2, to include a torque converter 1 having a lockup clutch L/C, a speed change gear mechanism 2, a reduction gear mechanism 3 and a differential mechanism 4.

The speed change gear mechanism 2 is exemplified by a planetary gear unit 20 having a single planetary gear 21 and a double planetary gear 22 coupled to each other. The single planetary gear 21 includes a sun gear S1, a ring gear R1, and a pinion P1 meshing with them. The double planetary gear 22 includes a sun gear S2, a ring gear R2, and a pair of pinions P1' and P2' meshing with each other and with the sun gear S2 and the ring gear R2, respectively. The two sun gears S1 and S2 of the planetary gear unit 20 are unified into a sun gear S. The individual pinions P1, P1' and P2' are supported by a common carrier CR.

An input shaft 23 of the speed change gear mechanism 2 leads to the output member of the torque converter 1 and is connected to a connecting member 24 through a clutch C1 and further to the sun gear S through a clutch C2. The connecting member 24 is connected through a clutch C3 to the ring gear R1 of the planetary gear unit 20 and further through a clutch C0 to the ring gear R2. A one-way clutch F0 is arranged in parallel with the clutch C3.

In addition, the sun gear S can be retained on a transmission case 10 by a brake B1 made of a band brake, and the ring gear R2 can be retained on the case 10 by a brake B2 and a one-way clutch F1 arranged in parallel with the former. Moreover, the carrier CR of the planetary gear unit is connected to an output gear 25, as located generally at the center of the speed change gear mechanism 2.

The reduction gear mechanism 3 is fixed on a counter shaft 31 which is rotatably borne by the case 10, and is constructed to include a larger gear 32 meshing as an input element with the output gear 25 of the speed change gear mechanism 2 and a smaller gear 33 forming an output element to the differential mechanism 4. This differential mechanism 4 includes: a differential carrier 42 rotatably borne by the case 10 and having a ring gear 41 meshing with the smaller gear 33; and a differential pinion 43 and left-hand and right-hand side pinions 44 and 45 borne by and arranged in the differential carrier 42 and meshing with each other. The left-hand and right-hand side pinions 44 and 45 are fixed on left-hand and right-hand axle shafts 46 and 47, respectively.

A control unit for controlling the mechanical portion of the automatic transmission, as described above, is constructed of a hydraulic control unit and an electronic control unit. The hydraulic control unit is constructed, like the conventional one, to include: a primary regulator valve for regulating the discharge pressure of the not-shown oil pump to a proper line pressure necessary for the torque transmission, on the basis of a signal to be outputted from the electronic control unit in accordance with the vehicle speed and the throttle opening; a secondary regulator valve for regulating the line pressure to a lower torque converter pressure to output the torque converter pressure to a torque converter control circuit and for outputting an excess pressure to a lubrication circuit; a manual valve adapted to be mechanically switched by the range selecting operation of the driver, to feed the line pressure to a suitable oil line; a linear solenoid valve for applying a signal pressure to the various regulator valves such as the aforementioned primary regulator valve; a variety of shift valves to be switched by individual ON/OFF solenoid valves; a number of check valves interposed in the individual oil lines; and a number of orifices interposed in the individual oil lines.

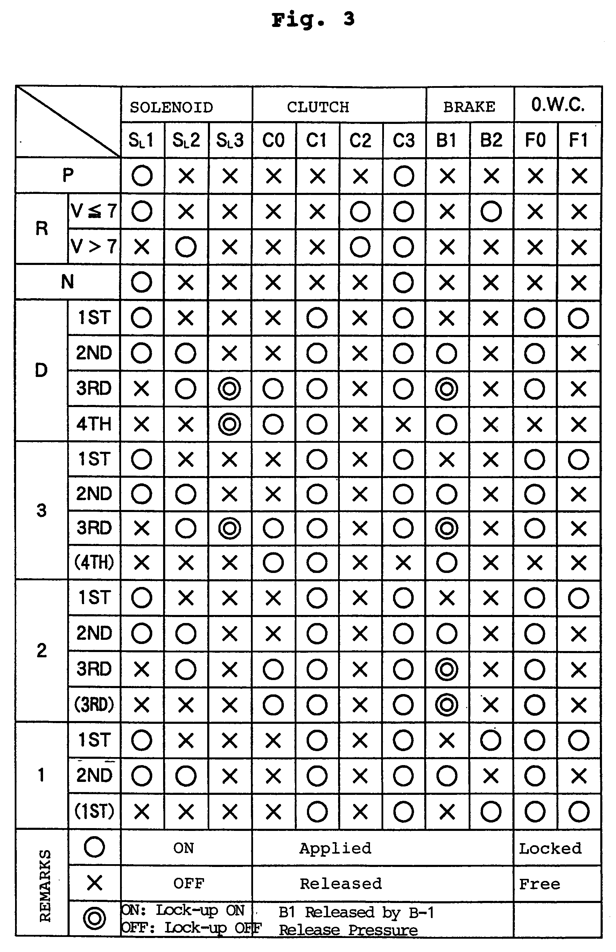

Thus, the automatic transmission is operated by the range selecting operation of the driver to switch the manual valve in the hydraulic control unit to the positions of the individual ranges "P", "R", "N", "D", "3", "2" and "1", as tabulated in the operation chart of Fig. 3. In response to the ON/OFF signals to be outputted from the electronic control unit in accordance with the vehicular running state, as dictated by the vehicle speed and the throttle opening, the individual solenoid valves SL1 to SL3 are turned ON (as indicated by symbol ◯ in the table) and/or OFF (as indicated by symbol X in the table) so that the individual shift valves are switched to switch the oil lines thereby to control the feeds the oil pressure to the hydraulic servos of the individual clutches C0 to C3 and brakes B1 and B2. In relation to the operations (whose locked operation is indicated by symbol ◯ and whose free operation is indicated by symbol X) of the one-way clutch (O.W.C.), the individual clutches and brakes are applied (as indicated by symbol ◯) and/or released (as indicated by symbols X and ◎) to establish the first to fourth (1ST to 4TH) gear stages and the reverse (R) gear stage.

At the first speed (1ST), more specifically, the clutches C1 and C3 shown in Fig. 2 are applied, and the one-way clutches F1 and F0 are applied, so that the rotation of the input shaft 23 is transmitted through the two clutches C1 and C3 and the one-way clutch F0 to the ring gear R1. Since, in this state, the rotation of the ring gear R2 is blocked by the one-way clutch F1, the rotation of the carrier CR, as drastically decelerated while rotating the sun gear S idly, is extracted from the output gear 25. Moreover, the rotation of this output gear 25 is decelerated by the reduction gear mechanism 3 and is further transmitted by the differential mechanism 4 to the left-hand and right-hand axle shafts 46 and 47.

Next, at the second speed, not only the two clutches C1 and C3 but also the brake B1 are applied, and the one-way clutch F0 is applied. As a result, the rotation of the input shaft 23 is inputted through the two clutches C1 and C3 and the one-way clutch F0 to the ring gear R1 so that the rotation of the ring gear R1 is extracted, after having reacting against the stationary sun gear S, as the second speed from the carrier CR while rotating the ring gear R2 idly.

At the third speed, moreover, not only the two clutches C1 and C3 but also the clutch C0 is applied, but the brake B1 is released. As a result, the rotation of the input shaft 23 is transmitted through the one-way clutch F0 and the clutch C3 to the ring gear R1 and through the clutch C0 to the ring gear R2 to rotate the planetary gear unit 20 as a whole so that this direct rotation is extracted from the carrier CR to the output gear 25.

At the fourth speed, moreover, the clutches C1 and C0 are applied, but the brake B1 is retained, and the clutch C3 is switched to the released state. As a result, the rotation of the input shaft 23 is transmitted through the clutch C0 to the ring gear R2, but the sun gear S is retained by the brake B1, so that it rotates the carrier CR at a high speed while rotating the ring gear R1 idly. This rotation is transmitted to the output gear 25.

In the reverse state, on the other hand, the clutch C2 and the brake B2 are applied. As a result, the rotation of the input shaft 23 is transmitted through the clutch C2 to the sun gear S. Since the ring gear R2 is stopped by the brake B2 being applied, the transmitted rotation of the input shaft 23 rotates the carrier CR backward while rotating the ring gear R1 idly backward, so that this reverse rotation is extracted from the output gear 25.

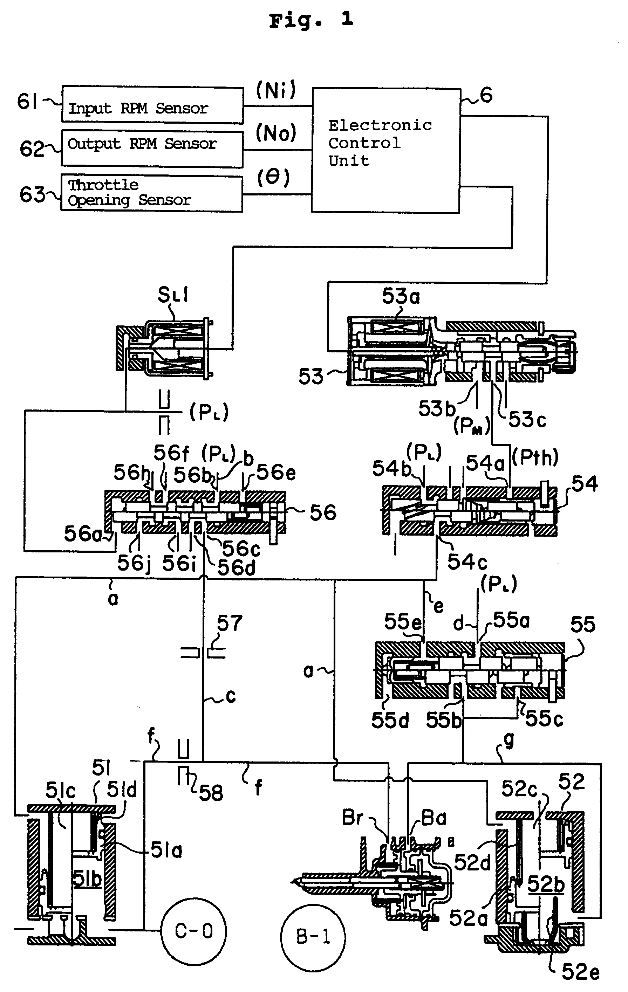

Fig. 1 shows only such a portion of the control system for controlling the aforementioned mechanical portion of the automatic transmission as is concerned with the control of the present invention. The control system is equipped with the individual hydraulic servos (although only the hydraulic servos C-0 and B-1 relating to the subject matter of the present invention are shown) for operating the aforementioned individual clutches C1, C2 and C3 and brakes B1 and B2. Of these hydraulic servos, the hydraulic servos for the individual clutches C1, C2 and C0 and the hydraulic servo B-1 for the brake B1 individually have accumulators arranged in parallel with them (although only the accumulators 51 and 52 are shown).

The accumulators 51 and 52 are equipped with pistons 51a and 52a such that individual accumulation chambers 51b and 52b communicating with the hydraulic servos C-0 and B-1 are formed in front of the pistons 51a and 52a whereas back pressure chambers 51c and 52c having pressure receiving areas equal to those of the accumulation chambers 51b and 52b are formed at the back of the individual pistons 51a and 52a. A spring 51d is arranged in the back pressure chamber 51c of the accumulator 51, and springs 52d and 52e are arranged in the accumulation chamber 52b and the back pressure chamber 52c of the accumulator 52, respectively.

As shown in Fig. 1, the control system includes a throttle pressure control valve 53, an accumulator control valve 54, a B-1 modulator valve 55, a 2-3 shift valve 56 and a solenoid valve SL1. The throttle pressure control valve 53, as composed of a linear solenoid valve, is so controlled by an electric signal of an electronic control unit 6, as based upon the throttle opening or the like, as to output a predetermined throttle pressure (Pth) on the basis of a modulator pressure (PM) which is reduced from the line pressure by the not-shown solenoid modulator valve. This throttle pressure control valve 53 has a solenoid 53a to be energized by the electric signal coming from the electronic control unit 6, an input port 53b of the modulator pressure (PM), and an output port 53c of the throttle pressure (Pth). This throttle pressure (Pth) from the output port 53c is applied as the signal pressure to the not-shown primary regulator valve and as the signal pressure to a feedback port 54a of the later-described accumulator control valve 54.

This accumulator control valve 54 is a spool valve having a regulator port 54c and the signal port 54a in addition to an input port 54b for the line pressure (PL). The oil pressure from the regulator port 54c is fed via an oil line a to the back pressure chambers 51c and 52c of the two accumulators 51 and 52.

On the other hand, the B-1 modulator valve 55 is a spool valve having a line pressure feed port 55a communicating with an oil line d for feeding the line pressure (PL), a regulator port 55b, a feedback port 55c, a restricting control oil chamber 55d, and a control oil chamber 55e communicating with the regulator port 54c of the accumulator control valve 54 via an oil line e. With no control oil pressure acting upon the control oil chambers 55d and 55e, the line pressure (PL) from the line pressure feed port 55a is outputted at a predetermined ratio to the regulator port 55b.

The 2-3 shift valve 56 is also a spool valve having a control oil chamber 56a to which is applied the oil pressure under the control of the solenoid valve SL1 or the ON/OFF solenoid valve, an input port 56b communicating with an oil line b for feeding the line pressure (PL), an output port 56c communicating via an oil line c and an oil line f with an oil chamber Br at the release side of the C0 clutch hydraulic servo C-0 and the B1 brake hydraulic servo, a drain port 56d, a "1" range restricting control oil chamber 56e, a line pressure feed port 56f, ports 56h and 56i provided in relation to other shift valves, and a drain port 56j. The 2-3 shift valve 56 is switched to the lower half position at the first and second speeds and to the upper half position at the third and fourth speeds.

In the oil line c for providing the communication between the hydraulic servo C-0 and the port 56c, moreover, there are interposed an orifice 57 and an orifice 58 upstream and downstream of the portion branching into the oil line f.

In this hydraulic circuit, at the third speed, the normally closed solenoid valve SL1 is OFF. In this state, the 2-3 shift valve 56 is caused to take its upper half position by applying the signal pressure to the control oil chamber 56a. As a result, the line pressure (PL) of the oil line b is fed through the input port 56b and the output port 56c to the oil line c and further through the orifice 57 to the clutch hydraulic servo C-0 and the accumulator chamber 51b of the accumulator 51.

In this state, moreover, the B-1 modulator valve 55 is in its regulated state in which the line pressure (PL) of the line pressure feed port 55a is reduced at a predetermined ratio by the feedback pressure of the feedback port 55c, so that the modulator pressure is applied via an oil line g to the apply side oil chamber Ba of the brake hydraulic servo B-1.

As a result, in the hydraulic servo B-1, the line pressure acting upon the release side oil chamber Br overcomes the modulator pressure acting upon the apply side oil chamber Ba, so that it moves the piston to release the band brake B1.

At the time of a 3→2 downshift from this state, the 2-3 shift valve 56 is switched to its lower half position by the ON of the solenoid valve SL1 so that the output port 56c communicating with the clutch hydraulic servo C-0 communicates with the drain port 56d. Then, the oil pressure in the release side oil chamber Br of the hydraulic servo B-1 is drained via the oil line f, the oil line c and the port 56c from the drain port 56d, and the oil pressure of the clutch hydraulic servo C-0 is also drained by way of the similar path. Since, at this time, the orifice 58 is interposed at the side of the hydraulic servo C-0 by branching the oil line c and the oil line f, the discharge of the oil pressure from the hydraulic servo C-0 is delayed from the discharge from the release side oil chamber Br of the hydraulic servo B-1 so that the release of the clutch C0 is delayed with respect to the application of the first brake B1.

At this time, as will be described hereinafter, on the basis of the signal from the electronic control unit 6, the throttle pressure control valve 53 suitably operates to establish the predetermined throttle pressure (Pth). This pressure is fed to the signal port 54a of the accumulator control valve 54 and further from the output port 54c of the accumulator control valve 54 via the oil line e to the control oil chamber 55e of the B-1 modulator valve 55 so that the oil pressure to be fed to the apply side oil chamber Ba of the hydraulic servo B-1 thereby to achieve the shift with a light shock.

Next, the 3→2 shift control of the present invention will be described in detail with reference to Figs. 1, 4 and 5. In Fig. 1 showing the construction of the control system for an automatic transmission according to the present invention, reference numeral 61 designates an input RPM sensor for detecting the input RPM (Ni) of the automatic transmission from the RPM of the clutch C1. Numeral 62 designates an output RPM sensor for detecting the output RPM (No) of the automatic transmission from the RPM of the larger gear 32 of the reduction gear mechanism 3. Numeral 63 designates a throttle opening sensor for detecting the throttle opening ($\varepsilon$). In accordance with the signals from the input RPM sensor 61, the output RPM sensor 62 and the throttle opening sensor 63, the electronic control unit 6 controls the first solenoid valve SL1 and the throttle pressure control valve 53 properly.

In this control system, the first engage element is exemplified by the brake B1 which establishes the second speed or the first gar stage when it is applied, and the second engage element is exemplified by the clutch C0 which establishes the third speed or the second gear stage when it is applied. The speed change from the third speed to the second speed is effected by the grip change, in which the clutch C0 is released whereas the brake B1 is applied.

The vehicle speed detecting means for detecting the vehicle speed is exemplified as its detection unit by the aforementioned output RPM sensor 62. The throttle acceleration detecting means for detecting the rate of change of the throttle opening ($\varepsilon$) of the engine per unit time as the throttle acceleration is exemplified as its detection unit by the throttle opening sensor 63 and the electronic control unit 6. The operation unit for computing the vehicle speed and the throttle acceleration from those detected signals is exemplified by the program of the electronic control unit 6. Moreover, the control means for controlling the grip change timings of the clutch C0 and the brake B1 on the basis of the vehicle speed detected by the vehicle speed detecting means and the throttle acceleration detected by the throttle acceleration detecting means is exemplified by the program of the electronic control unit 6 and the later-described accumulator back pressure control means.

The accumulator back pressure control means is constructed of the throttle pressure control valve 53 for controlling the back pressures of the accumulators 51 and 52 of the clutch C0 and the brake B1, and performs the functions to lower the back pressures, when the throttle acceleration detected by the throttle acceleration detecting means is high, and to raise the back pressures when the throttle acceleration is low. Moreover, the program of the electronic control unit 6, as constituting the operation unit of the accumulator back pressure control means, has maps of the accumulator back pressures, as set to correspond to the vehicle speed and the throttle acceleration. The maps are interchanged according to the vehicle speed detected by the vehicle speed detecting means, the throttle acceleration detected by the throttle acceleration detecting means, and the preset value.

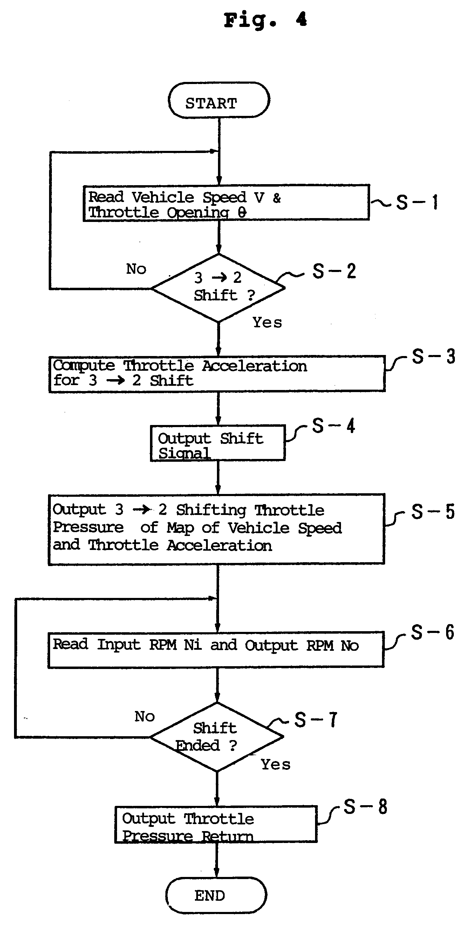

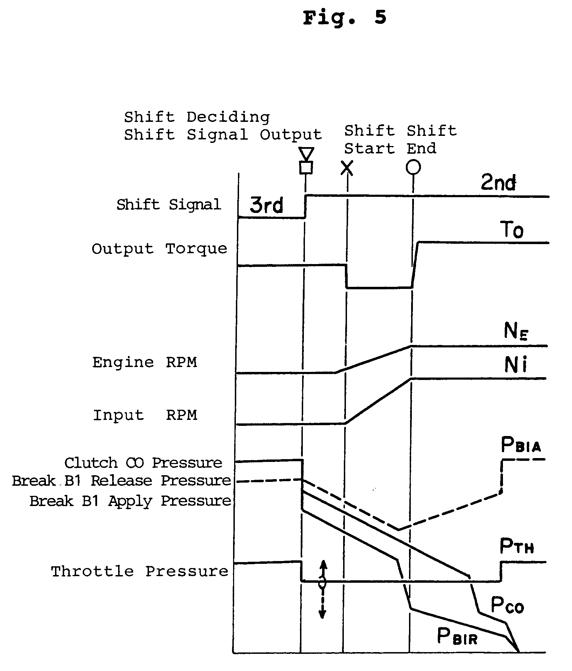

The control system thus constructed according to the present mode of embodiment performs the control according to the flow shown in Fig. 4. In the third speed state at the starting point of this 3→2 shift flow, the throttle pressure control valve 53, as shown in Fig. 1, outputs the throttle pressure (PTH) corresponding to the throttle opening, as shown in Fig. 5, and this oil pressure acts upon the signal port 54a of the accumulator control valve 54 so that the release pressure (PBIR) based upon the throttle pressure is outputted from the regulator port 54c. This oil pressure from the regulator port 54c acts upon the control oil chamber 55e of the B-1 modulator valve 55 to regulate the oil pressure of the line pressure feed port 55a to the modulator pressure for the third speed so that the regulated oil pressure is fed via the oil line g to the apply oil chamber Ba of the hydraulic servo B-1.

At Step S-1 of Fig. 4, the present vehicle speed (V) and the throttle opening ($\varepsilon$) are read on the basis of the signals from the output RPM sensor 62 and the throttle opening sensor 63. At Step S-2, it is decided whether or not the vehicle speed (V) and the throttle opening ($\varepsilon$), as read, satisfy the condition for the 3→2 shift. The routine advances to Step S-2, if the answer is YES, but returns to Step S-1 if the answer is NO. At Step S-3, the throttle acceleration for the 3→2 shift is computed. Here, the throttle acceleration (THROP) is calculated by the following formula for the throttle opening ($\varepsilon$ a) at the shift decision and for the throttle opening ($\varepsilon$ b) at (t) msecs before the shift decision:

$$THROP = (\varepsilon\ a - \varepsilon\ b)/t[\%/msecs].$$

At Step S-4 for outputting the shift signal, a signal for turning ON the solenoid valve SL1 is generated to switch the 2-3 shift valve 56 to the lower half position thereby to establish the second speed state. At Step S-5, a signal is soon outputted to output the 3→2 shifting throttle pressure (Pth) to the throttle pressure control valve 53. This throttle pressure (Pth) is raised to the higher level, as indicated by solid arrow in Fig. 5, for the slower step (or for the lower throttle acceleration) but is lowered to the lower level, as indicated by dotted arrow, for the quicker step (or for the higher throttle acceleration). By this change in the throttle pressure (Pth), moreover, the accumulator back pressure is changed by the accumulator control valve 54 so that both the clutch pressure (PC0), as shown in Fig. 5, and the brake release pressure (PBIR) are raised.

As a result, in the hydraulic circuit shown in Fig. 1, the output port 56c is opened to communicate with the drain port 56d by the change-over of the 2-3 shift valve 56, and the oil pressure in the hydraulic servo C-0 and in the release side oil chamber Br of the hydraulic servo B-1 is drained via the oil line f and the oil line c thereby to establish the gentle drain hydraulic characteristics, in which the flow rate is restricted by the orifice 57 interposed in the oil line c. At this time, the orifice 58 is located closer to the hydraulic servo C-0 than the branching point of the oil line f from the oil line c so that the discharge of the oil pressure (PC0) of the hydraulic servo C-0 is delayed more than the discharge of the oil pressure (PBIR) of the release side oil chamber Br, as shown in Fig. 5.

On the other hand, the oil pressure (PBIA) of the apply side oil chamber Ba of the brake B-1 is set at the low level in the third speed state, as described above, by the B-1 modulator valve 55 and is initially lowered, as indicated by the dotted curve in Fig. 5, in dependence upon the oil pressure (PBIR) of the release side oil chamber B4 so as to push back the piston of the hydraulic servo B-1 as the oil pressure of the release side oil chamber Br drops. As the oil pressure of the release side oil chamber Br further drops, the piston of the hydraulic servo B-1 is pushed back to its complete stroke to end the piston stroke. Then, the oil pressure of the apply side oil chamber Ba of the hydraulic servo B-1 gradually rises to start the application of the brake B1.

Next, at Step S-6, the input RPM (Ni) and the output RPM (No) are read from the input RPM sensor 61 and the output RPM sensor 62. At Step S-7 for deciding the shift end, the end of the shift is decided by examining whether or not the ratio of the input RPM (Ni) to the output RPM (No) is in the second speed state. The routine advances to Step S-8, if the answer is YES, but returns to Step S-6 if the answer is NO. At Step S-8 for outputting the oil pressure returning signal, moreover, the control of the 3→2 shift is ended by outputting, to the throttle pressure control valve 53, a signal to return to the throttle corresponding to the throttle opening, that is, a signal to change the oil pressure of the apply side oil chamber Ba to the line pressure for the brake B1 to engage.

As described hereinbefore, according to the control system for an automatic transmission according to the present mode of embodiment of the present invention, the throttle acceleration at the decision of the 3→2 shift is determined and is outputted together with the throttle pressure (Pth), as determined from the vehicle speed, from the throttle pressure control valve 53, thereby to control especially the back pressure of the accumulator 51. As a result, the release pressure (PC0) of the clutch C0 can be given the proper dropping characteristics to time the release of the clutch C0 and the application of the brake B1, so that the shift shock can be properly lightened irrespective of the stepping speed on the accelerator pedal. By determining the throttle pressure (Pth) at the 3→2 shifting time from the map of the throttle acceleration and the vehicle speed, moreover, the shift shock can be properly lightened over a wide stepping speed on the accelerator pedal.

Although the present invention has been described in connection with its one mode of embodiment, it can be practiced within the scope of the claim by modifying the specific construction of the detail in various manners. The control is exercised in the present invention on the basis of the vehicle speed and the throttle acceleration, but this throttle acceleration could be replaced by the rate of change in the differential rotation, which is computed like the throttle acceleration from the rate of change in the difference between the engine RPM and the transmission input RPM, so that the control may be exercised by the vehicle speed and the rate of change in the differential rotation.

## Claims

1. In an automatic transmission for achieving a first gear stage by applying a first engage element and a second gear stage by applying a second engage element and for effecting a shift from the second gear stage to the first gear stage by releasing said second engage element and by applying said first engage element,

   a control system comprising: vehicle speed detecting means for detecting a vehicle speed; throttle acceleration detecting means for detecting the rate of change in the throttle opening of an engine per unit time as a throttle acceleration; and control means for controlling the applying and releasing timings of the two engage elements on the basis of the vehicle speed detected by said vehicle speed detecting means and the throttle acceleration detected by said throttle acceleration detecting means.

2. A control system for an automatic transmission according to claim 1, wherein a hydraulic servo of said second engage element includes an accumulator and a back pressure chamber for said accumulator, wherein said control means is accumulator back pressure control means for controlling the back pressure of said accumulator, to lower the back pressure, when the throttle acceleration detected by said throttle acceleration detecting means is high, but to raise the back pressure when said throttle acceleration is low.

3. A control system for an automatic transmission according to claim 1 or 2, wherein said control means is accumulator back pressure control means for controlling the back pressure of the accumulator of the hydraulic servo of said second engage element, wherein said accumulator back pressure control means has maps of the accumulator back pressure, as set to correspond to the vehicle speed and the throttle acceleration, and wherein said maps are interchanged according to the vehicle speed detected by said vehicle speed detecting means, the throttle acceleration detected by said throttle acceleration detecting means, and a predetermined value.

4. A control system for an automatic transmission according to any of the claims 1 to 3, wherein said throttle acceleration detecting means detects the rate of change in the throttle opening for a predetermined time period from a predetermined time before a shift decision to the shift decision, as the throttle acceleration.

5. A control system for an automatic transmission according to claim 2 or 3, wherein the accumulator back pressure control means acting as said control means includes:

an electronic control unit; a throttle pressure control valve for outputting a throttle pressure in response to an electric signal coming from said electronic control unit; and an accumulator control valve for outputting said accumulator back pressure in response to said throttle pressure.

# Fig. 1

## Fig. 2

## Fig. 3

| | | SOLENOID | | | CLUTCH | | | | BRAKE | | O.W.C. | |
|---|---|---|---|---|---|---|---|---|---|---|---|---|
| | | $S_L1$ | $S_L2$ | $S_L3$ | C0 | C1 | C2 | C3 | B1 | B2 | F0 | F1 |
| P | | ○ | × | × | × | × | × | ○ | × | × | × | × |
| R | V ≤ 7 | ○ | × | × | × | × | ○ | ○ | × | ○ | × | × |
| | V > 7 | × | ○ | × | × | × | ○ | ○ | × | × | × | × |
| N | | ○ | × | × | × | × | × | ○ | × | × | × | × |
| D | 1ST | ○ | × | × | × | ○ | × | ○ | × | × | ○ | ○ |
| | 2ND | ○ | ○ | × | × | ○ | × | ○ | ○ | × | ○ | × |
| | 3RD | × | ○ | ◎ | ○ | ○ | × | ○ | ◎ | × | ○ | × |
| | 4TH | × | × | ◎ | ○ | ○ | × | × | ○ | × | × | × |
| 3 | 1ST | ○ | × | × | × | ○ | × | ○ | × | × | ○ | ○ |
| | 2ND | ○ | ○ | × | × | ○ | × | ○ | ○ | × | ○ | × |
| | 3RD | × | ○ | ◎ | ○ | ○ | × | ○ | ◎ | × | ○ | × |
| | (4TH) | × | × | × | ○ | ○ | × | × | ○ | × | × | × |
| 2 | 1ST | ○ | × | × | × | ○ | × | ○ | × | × | ○ | ○ |
| | 2ND | ○ | ○ | × | × | ○ | × | ○ | ○ | × | ○ | × |
| | 3RD | × | ○ | × | ○ | ○ | × | ○ | ◎ | × | ○ | × |
| | (3RD) | × | × | × | ○ | ○ | × | ○ | ◎ | × | ○ | × |
| 1 | 1ST | ○ | × | × | × | ○ | × | ○ | × | ○ | ○ | ○ |
| | 2ND | ○ | ○ | × | × | ○ | × | ○ | ○ | × | ○ | × |
| | (1ST) | × | × | × | × | ○ | × | ○ | × | ○ | ○ | ○ |
| REMARKS | ○ | ON | | | Applied | | | | | | Locked | |
| | × | OFF | | | Released | | | | | | Free | |
| | ◎ | ON: Lock-up ON OFF: Lock-up OFF | | | B1 Released by B-1 Release Pressure | | | | | | | |

11

**Fig. 4**

```
                    ┌──────────────┐
                    │    START     │
                    └──────┬───────┘
                           │
        ┌──────────────────┼──────────────────┐
        │                  ▼                   │
        │   ┌───────────────────────────┐      │
        │   │ Read Vehicle Speed V &    │──── S-1
        │   │ Throttle Opening θ        │      │
        │   └───────────────────────────┘      │
        │                  │                   │
        │           No     ▼                   │
        │        ◄────◇ 3 → 2 ◇──── S-2
        └─────────────│ Shift ? │
                      ◇─────────◇
                           │ Yes
                           ▼
        ┌───────────────────────────┐
        │ Compute Throttle Acceleration │──── S-3
        │ for 3 → 2 Shift           │
        └───────────────────────────┘
                           │
                           ▼
            ┌──────────────────┐
            │ Output Shift     │──── S-4
            │ Signal           │
            └──────────────────┘
                           │
                           ▼
        ┌───────────────────────────┐
        │ Output 3 → 2 Shifting Throttle │──── S-5
        │ Pressure  of Map of Vehicle Speed │
        │ and Throttle Acceleration │
        └───────────────────────────┘
                           │
        ┌──────────────────┼──────────────────┐
        │                  ▼                   │
        │   ┌───────────────────────────────┐ │
        │   │ Read Input RPM Ni and Output RPM No │──── S-6
        │   └───────────────────────────────┘ │
        │                  │                   │
        │           No     ▼                   │
        │        ◄────◇ Shift  ◇──── S-7
        └─────────────│ Ended ? │
                      ◇─────────◇
                           │ Yes
                           ▼
            ┌──────────────────┐
            │ Output Throttle  │──── S-8
            │ Pressure Return  │
            └──────────────────┘
                           │
                           ▼
                    ┌──────────────┐
                    │     END      │
                    └──────────────┘
```

EP 0 758 061 A1

# Fig. 5

13

## Fig. 6

(A)

3rd    2nd

Shift Signal

To   Light Shock

Output Torque

$N_E$   $N_i$   $\Delta N$ Large ⇨

Engine RPM   $\Delta N$ Small ⇨   Input RPM

$P_{BIA}$   $P_{CO}$   $P_{TH}$   $P_{BIR}$

Clutch CO Pressure
Brake B1 Release Pressure
Brake B1 Apply Pressure

Throttle Pressure

(B)

3rd    2nd

To   Heavy Shock

$N_E$   $N_i$

$P_{BIA}$   $P_{CO}$   $P_{TH}$   $P_{BIR}$

14

## EUROPEAN SEARCH REPORT

**European Patent Office**

Application Number

EP 96 11 0737

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 281 304 A (TOYOTA MOTOR CO LTD) 7 September 1988 <br> * the whole document * <br> --- | 1,3,5 | F16H61/06 |
| A | DE 41 11 514 A (AISIN SEIKI) 17 October 1991 <br> * column 2, line 56 - column 3, line 21 * <br> --- | 1,2,5 | |
| A | US 5 182 970 A (GOTO SHIGEKI ET AL) 2 February 1993 <br> * claim 1 * <br> --- | 1 | |
| A | GB 2 190 715 A (HONDA MOTOR CO LTD) 25 November 1987 <br> * abstract * <br> --- | 1 | |
| A | DE 41 19 078 A (JATCO CORP) 12 December 1991 <br> * column 5, line 27 - line 51; figure 7 * <br> ----- | 3 | |
| | | | TECHNICAL FIELDS SEARCHED (Int.Cl.6) <br><br> F16H |

The present search report has been drawn up for all claims

| Place of search | Date of completion of the search | Examiner |
|---|---|---|
| BERLIN | 12 November 1996 | Gertig, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)